# EUROPEAN PATENT APPLICATION

(11) **EP 3 165 264 A1**
(43) Date of publication of application: **10.05.2017**
(21) Application number: 15815824.6
(22) Date of filing: 28.05.2015
(51) Int. Cl.: A63D 15/00, G03B 29/00

(54) **INFRARED PROJECTION BILLIARD ENTERTAINMENT SYSTEM AND IMPLEMENTATION METHOD THEREOF**

(30) Priority: 02.07.2014 CN 201410312478
(71) Applicant: Qiao, Bing, Qinhuangdao, Hebei 066000 (CN); Li, Jiaoang, Shenyang, Liaoning 110002 (CN)
(72) Inventor: Qiao, Bing, Qinhuangdao, Hebei 066000 (CN); Li, Jiaoang, Shenyang, Liaoning 110002 (CN)
(74) Representative: Casalonga
(86) International application number: PCT/CN2015/080004
(87) International publication number: WO 2016/000503

(57) **Abstract**

An infrared projection billiard entertainment system and an implementation method thereof. The system comprises a billiard table (8), an image capture device (7), a projection device (6), a computer (3), a hollow billiard illuminating lamp (4), an infrared light supplementary lamp (5), a projection hanger (1) and an image capture device hanger (2). The computer (3) controls the image capture device (7) to switch to a visible light filter disc and capture the movement image information of billiard balls (9) on the billiard table (8) so as to obtain the information of positions, movement tracks and movement results of the billiard balls (9) in the image information. According to the movement tracks of the billiard balls (9) and/or the movement results of the billiard balls (9), the computer (3) controls the projection device (6) to play corresponding special-effect images on the billiard table (8) and/or the computer (3) plays corresponding sound effects.

## Description

### TECHNICAL FIELD OF THE INVENTION

The invention herein generally relates to software system of the infrared and projection technology, applied in the entertainment activities in playing billiards including 8-ball pool, 9-ball pool and Snooker for all kinds and levels of billiards lovers, and particularly to the infrared projection billiards entertainment system and the method thereof.

### BACKGROUND OF THE INVENTION

Billiards is a really charming activity and lots of people are fond of it. Since it is very easy to play and rich in the way of playing, while has high requirements on the personally technical level, billiards attracts many lovers of various levels. However, training of billiards is really boring and difficult, which holds most people back. If the billiards table turns to be colorful and lively, and the training course of the billiards is changed to be a billiards game, more people will be attracted to join this gentle sports.

The prior art "Projection raining system of the billiards and the method thereof" (PATENT NO.: ZL201110312228.0), wherein there are the following problems:
it pays more attention to the professional training of billiards, which is suitable for professional players but not beginners. If it can be improved with breakthrough based on this art, billiards will be more entertaining.

In the operation of the system, when the image of the video or picture is projected on the billiards table with billiards, the camera captures not only the image of real billiards but also other projection. When the image is analyzed by the computer, it's very difficult to analyze the real position of billiards or distinguish the foreground and the background.

This system can be operated successfully only under the demanding light environment, otherwise shadow will be produced due to the change of lighting directions which will affect analysis of the computer; capturing effects of the image will be affected due to decrease or increase of light; and the image color of billiards when being captured will be affected due to change of color temperature, etc. However, it's very difficult for the billiards club of many lovers moving around to meet this requirement of the light environment, so that it shall cost very high in the environment to operate this system.

### BRIEF SUMMARY OF THE INVENTION

In order to overcome the drawbacks of the prior art "Projection raining system of the billiards and the method thereof", an objective of the present invention is to provide an infrared projection billiards entertainment system and the method thereof, which is more entertaining, faster and more accurate to acquire the information of billiards on the table with less effects of the light environment and lower cost, so that more billiards lovers can be attracted into the billiards sports and improve their technical level in the billiards game which is various and fun.

In order to achieve the above objective, the present invention proposes the following technical solutions: an infrared projection billiards entertainment system, comprising the image acquisition device, the projection device, and the computer, wherein the signal output end of the image acquisition device is connected to the input end of the computer, the input end of the projection device is connected to the output end of the computer and controlled by the computer, and hollow billiards light, the infrared light supplement lamp, the projection hanger and the hanger of the image acquisition device are also equipped; the infrared light supplement lamp is fixed on the hollow billiards light, of which the lighting end is as high as the bottom of the hollow billiards light; the image acquisition device is disposed at the bottom of the image acquisition device, of which the head end is aimed at the hollow part center of the hollow billiards light and no under the bottom of the hollow billiards light; the hollow billiards light is fixed above the billiards table, so that the image acquisition device is right in front of the center of the billiards table; the projection device and the computer are both installed at the bottom of the projection hanger and hung to the side of the hollow billiards light.

The projection device adopts a projector.

The image acquisition device adopts the camera with the filter of visible light.

The image acquisition device can adopt the camera with both infrared filter and the filter of visible light.

The hollow billiards light is hung at least 1 meter high above the billiards table.

A method for the infrared projection billiards entertainment system, wherein if the image acquisition device adopts the camera with the filter of visible light, the following steps are included:
the computer controls the image acquisition device to capture the moving image information of the billiards on the billiards table in which there's only the real object shone by the infrared supplement light and the visible light projected to the billiards table by the projection device is filtered;
the computer receives the image information, compares and analyzes the background and the previous frame, then acquires the billiards information of positions, tracks and moving results in the image information;
according to the track of the billiards and/or the moving result of the billiards, the computer will control the projection device to display the corresponding special-effect pictures on the billiards table and/or play the corresponding sound effects from the computer.

A method for the infrared projection billiards entertainment system, wherein if the image acquisition device adopts the camera with the filter of both infrared and visible light, the following steps are included:
the computer controls the image acquisition device to change into the filter of visible light and capture the moving image information of the billiards on the billiards table in which there's only the real object shone by the infrared supplement light and the visible light projected to the billiards table by the projection device is filtered;
the computer receives the image information, compares and analyzes the background and the previous frame, then acquires the billiards information of positions, tracks and moving results in the image information;
the computer controls the image acquisition device to change into the filter of infrared and capture the moving image information of the billiards colors on the billiards table;
the computer analyzes the position information of the billiards as well as the image information of the billiards colors, and determines the billiards information of the number/type at each position;
according to the track of the billiards, information of the number/type, and/or the moving result of the billiards, the computer will control the projection device to display the corresponding special-effect pictures on the billiards table and/or play the corresponding sound effects from the computer.

The moving state of the billiards consists of hitting, moving, stopping, pot and hitting the cushion.

The method of comparing and analyzing the background is that: first take the billiards table without any billiards as the background image, then compare and analyze the image of the billiards table with billiards and the background image, at last receive the position of the billiards.

The method of comparing and analyzing the previous frame is that: compare the two neighboring frames of the image information acquired, and determine the track and the position of the billiards through judging the change part.

Therefore, the following advantages and good effects of the present invention become apparent:
since the camera with the filter of the visible light is adopted to filter the shadow of the projector on the table, the position and the track of billiards are easily analyzed by the computer.

Since the infrared light supplement lamp is adopted, the light effect of the environment is reduced in the process of capturing images.

In the process of hitting, moving, stopping, pot and hitting the cushion for the real billiards, the special-effect animation is combined with the sound effects in real time to make the billiards game more entertaining and attractive.

Since the position and the color of billiards can be analyzed accurately, the system becomes more intelligent. Other development based on it will make billiards be more an entertainment activity.

### BRIEF DESCRIPTION OF THE DRAWINGS

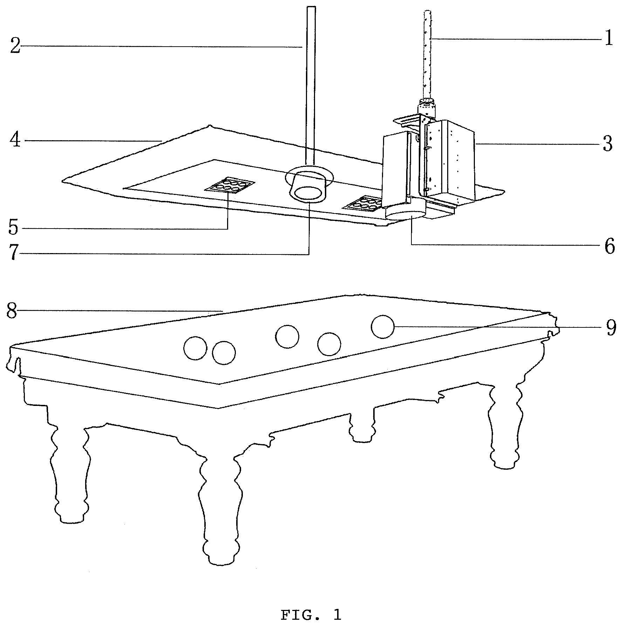

FIG.1 is a structural diagram of the system provided in accordance with the present invention;
   thereinto, 1. projection hanger, 2. hanger of the image acquisition device, 3. computer, 4. hollow billiards light, 5. infrared light supplement lamp, 6. projection device, 7. image acquisition device, 8. billiard table, 9. billiards.

### DETAILED DESCRIPTION OF THE INVENTION

The present invention will now be described more specifically with reference to the drawings and the following embodiments.

Referring to FIG.1, the infrared projection billiards entertainment system consists of the billiards table 8, the image acquisition device 7, the hanger of the image acquisition device 2, the hollow billiards light 4, the infrared light supplement lamp 5, the projection device 6, the projection hanger 1, the computer 3 and the billiards 9; the infrared light supplement lamp 5 are fixed on the hollow billiards light 4, of which the lighting end is as high as the bottom of the hollow billiards light 4; the image acquisition device 7 is disposed at the bottom of the hanger 2 of image acquisition device, of which the head end is aimed at the hollow part center of the hollow billiards 4 light and no under the bottom of the hollow billiards light 4, and of which the signal output end is connected to the input end of the computer 3; the hollow billiards light 4 is hung at least 1 meter high above the billiards table 8 so that the image acquisition device 7 is right in front of the center of the billiards table 8; the projection device 6 and the computer 3 are both installed at the bottom of the projection hanger 1 and hung at the side of the hollow billiards light 4, and the input end of the projection device 6 is connected to the output end of the computer 3 and controlled by the computer 3. The projection device 6 adopts a projector. The image acquisition device 7 adopts the camera with the filter of visible light. The image acquisition device 7 can adopt the camera with both infrared filter and the filter of visible light.

The method for the infrared projection billiards entertainment system, comprising:
the moving images of billiards 9 on the billiards table 8 are captured by the image acquisition device 7 which is controlled by the computer 3. As the visible light has been filtered by the filter of visible light, there are only the real objects shone by the infrared light supplement lamp, that is, the billiards table 8, billiards 9, the cue and the image of the user, but not the shadow of the projection device on the table in the image information captured. The computer 3 receives the image information, compares and analyzes the background and the previous frame, then acquires the position information of billiards 9. In the process of programming, the image processing function in OpenCV (a cross-platform Computer Visual Library based on the open source) of C Language is applied to compare and analyze: A. Comparison and analysis of the background: first take the billiards table 8 without any billiards 9 as the background image, then compare and analyze the image of the billiards table 8 with billiards 9 and the background image, at last receive the position of the billiards 9. B. Comparison and analysis of the previous frame: compare the two neighboring frames of the image information acquired, and determine the track and the position of the billiards 9 through judging the change part. The information of the billiards 9 position and its track in the image information can be received based on the two ways above. The computer 3 judges the moving state of hitting, moving, stopping, pot and hitting the cushion of billiards 9 according to the coordinate of the billiards 9 position and the track, then generates the special effects of animation and games in accordance with the different state of billiards 9, and at the same time projects the corresponding special-effect pictures on the billiards table 8 and plays related sound effects to match the special-effect pictures and music with the real billiards 9 on the billiards table 8, so that a cool effect can be received on the billiards table 8 combined the real billiards 9 and unreal special-effect pictures with the live sound effects. Then the corresponding images of rewards or punishments will be projected immediately on the billiards table 8, according to the user's hitting results of billiards 9.

If the image acquisition device 7 adopts the camera with the filter of both infrared and visible light, first the camera of the image acquisition device 7 controlled by the computer 3 is changed into the filter of visible light to filter visible light so that the image of billiards 9 captured will not be interfered by the visible light, and the accurate position of billiards 9 can be analyzed easily by the computer. Second the camera controlled by the computer 3 is changed into the infrared filter with which the color information of billiards 9 is on the captured image. Third the color of billiards 9 at that position is determined according to the position information of billiards 9 analyzed. Thus, the system can not only know clearly the position of billiards 9, but also the color of billiards 9 at that position. The system is more intelligent and more entertainment forms can be developed based on it to attract more billiards lovers.

## Claims

1. An infrared projection billiards entertainment system, comprising: the image acquisition device (7), the projection device (6), and the computer (3), wherein the signal output end of the image acquisition device (7) is connected to the input end of the computer (3), the input end of the projection device (6) is connected to the output end of the computer (3) and controlled by the computer (3), and hollow billiards light (4), the infrared light supplement lamp (5), the projection hanger (1) and the hanger (2) of the image acquisition device are also equipped; the infrared light supplement lamp (5) are fixed on the hollow billiards light (4), of which the lighting end is as high as the bottom of the hollow billiards light (4); the image acquisition device (7) is disposed at the bottom of the image acquisition device (2), of which the head end is aimed at the hollow part center of the hollow billiards light (4) and no under the bottom of the hollow billiards light (4); the hollow billiards light (4) is fixed above the billiards table (8), so that the image acquisition device (7) is right in front of the center of the billiards table (8); the projection device (6) and the computer (3) are both installed at the bottom of the projection hanger (1) and hung to the side of the hollow billiards light (4).

2. The system of Claim 1, wherein the projection device adopts a projector.

3. The system of Claim 1, wherein the image acquisition device (6) adopts the camera with the filter of visible light.

4. The system of Claim 1 or 3, wherein the image acquisition device (7) can adopt the camera which have both infrared filter and the filter of visible light.

5. The system of Claim 1, wherein the hollow billiards light (4) is hung at least 1 meter high above the billiards table (8).

6. A method for the infrared projection billiards entertainment system of Claim 1, wherein if the image acquisition device (7) adopts the camera with the filter of visible light, the following steps are included:
the computer (3) controls the image acquisition device (7) to capture the moving image information of the billiards (9) on the billiards table (8) in which there's only the real object shone by the infrared supplement light and the visible light projected to the billiards table (8) by the projection device (6) is filtered;
the computer (3) receives the image information, compares and analyzes the background and the previous frame, then acquires the billiards information of positions, tracks and moving results in the image information;
according to the track of the billiards (9) and/or the moving result of the billiards (9), the computer (3) will control the projection device (6) to display the corresponding special-effect pictures on the billiards table (8) and/or play the corresponding sound effects from the computer (3).

7. A method for the infrared projection billiards entertainment system of Claim 1, wherein if the image acquisition device (7) adopts the camera with the filter of both infrared and visible light, the following steps are included:
the computer (3) controls the image acquisition device (7) to change into the filter of visible light and capture the moving image information of the billiards (9) on the billiards table (8) in which there's only the real object shone by the infrared supplement light and the visible light projected to the billiards table (8) by the projection device (6) is filtered;
the computer (3) receives the image information, compares and analyzes the background and the previous frame, then acquires the billiards (9) information of positions, tracks and moving results in the image information;
the computer (3) controls the image acquisition device (7) to change into the filter of infrared and capture the moving image information of the billiards (9) colors on the billiards table (8);
the computer analyzes the position information of the billiards (9) as well as the image information of the billiards (9) colors, and determines the billiards information of the number/type at each position;
according to the track of the billiards (9), information of the number/type, and/or the moving result of the billiards (9), the computer (3) will control the projection device (6) to display the corresponding special-effect pictures on the billiards table (8) and/or play the corresponding sound effects from the computer (3).

8. The method of Claim 6 or 7, wherein the moving state of the billiards (9) consists of hitting, moving, stopping, pot and hitting the cushion.

9. The method of Claim 6 or 7, wherein the method of comparing and analyzing the background is that: first take the billiards table (8) without any billiards (9) as the background image, then compare and analyze the image of the billiards table (8) with billiards (9) and the background image, at last receive the position of the billiards (9).

10. The method of Claim 6 or 7, wherein the method of comparing and analyzing the previous frame is that: compare the two neighboring frames of the image information acquired, and determine the track and the position of the billiards (9) through judging the change part.
